# EUROPEAN PATENT APPLICATION

(11) **EP 2 506 571 A1**
(43) Date of publication of application: **03.10.2012**
(21) Application number: 10831152.3
(22) Date of filing: 19.11.2010
(51) Int. Cl.: H04N 7/18, H04L 12/26

(54) **ANALOG AND DIGITAL VIDEO MONITORING FUSION SYSTEM AND FUSION METHOD THEREOF**

(30) Priority: 23.11.2009 CN 200910188427
(71) Applicant: ZTE Corporation, Shenzhen, Guangdong 518057 (CN)
(72) Inventor: ZHOU, Yonghong, Shenzhen Guangdong 518057 (CN)
(74) Representative: Ilgart, Jean-Christophe
(86) International application number: PCT/CN2010/078930
(87) International publication number: WO 2011/060737

(57) **Abstract**

The present invention discloses an analog and digital video surveillance combination system and method. The system comprises an analog video surveillance system, a digital video surveillance system and a digital-analog virtual matrix, wherein the digital-analog virtual matrix, connected between the analog video surveillance system and the digital video surveillance system, is configured to realize a conversion of signaling protocols between the analog video surveillance system and the digital video surveillance system; acquire a video signal from the analog video surveillance system, convert the video signal into a digital video stream and send the digital video stream to the digital video surveillance system; acquire a digital video stream from the digital video surveillance system, decode the digital video stream and output a decoding result to the analog video surveillance system. The present invention realizes that the digital video surveillance system can access and control a video source of the analog video surveillance system, and meanwhile, the analog video surveillance system can also control and access a video source of the digital video surveillance system, so that two types of video surveillance systems together existing in the related art can be in seamless butt joint; and resource sharing can be realized, thereby avoiding resource waste caused by updating technology and reducing the updating cost of the system.

## Description

### Field of the Invention

The present invention relates to the field of multimedia communication technologies, in particular to an analog and digital video surveillance combination system and method.

### Background of the Invention

With the development of multimedia technology, a previous analog video surveillance system is gradually replaced by a digital network video surveillance system. In view of resource utilization and users' benefit, the analog video surveillance system will continue to exist within a certain time; however, newly established systems basically adopt the digital network video surveillance system, thus, the analog video surveillance system and the digital video surveillance system will coexist within a certain time. For a user who has established the analog video surveillance system, the continuative expansion of the analog video surveillance system is not in line with the technology development tendency obviously. However, if the digital video surveillance system is applied during expansion, the two incompatible systems would cause greatly increase in establishment and operation cost; if the old analog video surveillance system is directly eliminated, a waste of resources is caused too.

### Summary of the Invention

In order to solve the problem in the related art that an analog video surveillance system and a digital network video surveillance system are incompatible, the present invention provides a video surveillance system where analog mode and digital mode are combined and a combination method.

In order to achieve the object above, the present invention adopts the following technical solution.

An analog and digital video surveillance combination system, comprising: an analog video surveillance system, a digital video surveillance system and a digital-analog virtual matrix, wherein the digital-analog virtual matrix, connected between the analog video surveillance system and the digital video surveillance system, is configured to realize a conversion of signaling protocols between the analog video surveillance system and the digital video surveillance system; acquire a video signal from the analog video surveillance system, convert the video signal into a digital video stream and send the digital video stream to the digital video surveillance system; acquire a digital video stream from the digital video surveillance system, decode the digital video stream and output a decoding result to the analog video surveillance system.

In one implementation, in the analog and digital video surveillance combination system, the digital-analog virtual matrix comprises a signaling interworking gateway, a video encoder and a video decoder, wherein the signaling interworking gateway, connected to the analog video surveillance system and the digital video surveillance system respectively, is configured to realize the conversion of the signaling protocols between the analog video surveillance system and the digital video surveillance system; the video encoder, a video input of which is connected to a video output of the analog video surveillance system, is configured to convert the video signal into the digital video stream and send the digital video stream to the digital video surveillance system; and the video decoder is configured to acquire the digital video stream from the digital video surveillance system, decode the digital video stream and output a video signal to the analog video surveillance system.

Meanwhile, the present invention provides a method for combining analog and digital video surveillance systems, comprising: deploying a digital-analog virtual matrix between an analog video surveillance system and a digital video surveillance system, wherein the digital-analog virtual matrix is configured to realize a conversion of signaling protocols between the analog video surveillance system and the digital video surveillance system, acquire a video signal from the analog video surveillance system, convert the video signal into a digital video stream and send the digital video stream to the digital video surveillance system, acquire a digital video stream from the digital video surveillance system, decode the digital video stream and output a decoding result to the analog video surveillance system.

In one implementation, the method for combining analog and digital video surveillance systems also comprises: configuring a signaling interworking gateway, a video encoder and a video decoder on the digital-analog virtual matrix, wherein the signaling interworking gateway is configured to realize the conversion of the signaling protocols between the analog video surveillance system and the digital video surveillance system; the video encoder, a video input of which is connected to a video output of the analog video surveillance system, is configured to convert the video signal into the digital video stream and send the digital video stream to the digital video surveillance system; the video decoder is configured to acquire the digital video stream from the digital video surveillance system, decode the digital video stream and output a video signal to the analog video surveillance system.

In one implementation, the method for combining analog and digital video surveillance systems comprises a step of the digital video surveillance system calling a video image of the analog video surveillance system which comprises:
the digital video surveillance system sending a signaling of calling a video channel of the analog video surveillance system to the signaling interworking gateway;
the signaling interworking gateway mapping a digital video channel number as a video channel number in the analog video surveillance system, and selecting, from the video encoder, a video channel as an input of an analog video signal;
the signaling interworking gateway converting protocols and sending a signaling of calling an analog video channel to a matrix controller of the analog video surveillance system;
the matrix controller sending a video channel switch signaling to an analog matrix, and the analog matrix outputting a called video channel input signal to the video encoder according to the video channel switch signaling; and
the video encoder encoding the input video signal to obtain a digital video stream and sending the digital video stream to the digital video surveillance system.

In one implementation, the method for combining analog and digital video surveillance systems comprises a step of the digital video surveillance system controlling a pan/tilt/zoom (PTZ) of the analog video surveillance system which comprises:
a surveillance client of the digital video surveillance system sending a PTZ control signaling to the signaling interworking gateway;
after receiving the PTZ control signaling, the signaling interworking gateway mapping a digital video channel number as a video channel number in the analog video surveillance system, and converting the PTZ control signaling of the digital video surveillance system into a PTZ control signaling of the analog video surveillance system;
the signaling interworking gateway sending the PTZ control signaling of the analog video surveillance system to a matrix controller in the analog video surveillance system;
the matrix controller forwarding the PTZ control signaling to an analog matrix according to the video channel number, and the analog matrix controlling the PTZ of the analog video surveillance system.

In one implementation, the method for combining analog and digital video surveillance systems comprises a step of the analog video surveillance system calling a video image of the digital video surveillance system which comprises:
a matrix controller of the analog video surveillance system receiving a signaling of calling a video channel of the digital video surveillance system;
the matrix controller forwarding the signaling of calling the video channel to the signaling interworking gateway;
after receiving the signaling of calling the video channel, the signaling interworking gateway analyzing the signaling of calling the video channel, mapping a video channel number in the analog video surveillance system as a video channel number of the digital video surveillance system, and selecting the video decoder and an output channel of the video decoder;
the signaling interworking gateway sending the signaling of calling the video channel to the selected video decoder;
the selected video decoder actively requesting a video from the digital video surveillance system, decoding a digital video stream after the digital video surveillance system sends the digital video stream to the video decoder, and outputting an analog video signal to the analog video surveillance system.

In the above, if an output of the video decoder is connected to an input of an analog matrix in the analog video surveillance system; the matrix controller sends a matrix control signaling to a corresponding analog matrix simultaneously to control the analog matrix to switch the video signal output by the video decoder to a TV wall display device.

In one implementation, the method for combining analog and digital video surveillance systems comprises a step of the analog video surveillance system controlling a PTZ of the digital video surveillance system which comprises:
when receiving a signaling of controlling the PTZ of the digital video surveillance system, the analog video surveillance system sending the signaling of controlling the PTZ of the digital video surveillance system to a matrix controller;
the matrix controller forwarding the signaling of controlling the PTZ of the digital video surveillance system to the signaling interworking gateway;
after receiving the signaling of controlling the PTZ of the digital video surveillance system, the signaling interworking gateway analyzing the signaling of controlling the PTZ of the digital video surveillance system, mapping a video channel number in the analog video surveillance system as a video channel number of the digital video surveillance system, forming a PTZ control signaling of the digital video surveillance system and sending the PTZ control signaling to the digital video surveillance system; then the PTZ of the digital video surveillance system responding to the PTZ control signaling of the digital video surveillance system.

In specific implementation, in the above method for combining analog and digital video surveillance systems, the signaling interworking gateway and a matrix controller of the analog video surveillance system are interconnected through an Internet Protocol (IP) network or other communication interfaces.

Compared with the prior art, the present invention has advantages as follows.

The system and the method of the present invention realize that the digital video surveillance system can access and control a video source of the analog video surveillance system, and meanwhile, the analog video surveillance system can also control and access a video source of the digital video surveillance system, so that two types of video surveillance systems together existing in the related art can be in seamless butt joint.

The system and the method of the present invention realize resource sharing of analog and digital video surveillance systems, enable users to eliminate the analog technology gradually, avoid resource waste caused by updating technology, and reduce the updating cost of the system.

### Brief Description of the Drawings

Fig. 1 shows a schematic diagram of the combination deployment of analog and digital video surveillance systems according to an embodiment of the present invention;
Fig. 2 shows a flowchart of the analog video surveillance system calling a video image of the digital video surveillance system according to an embodiment of the present invention;
Fig. 3 shows a flowchart of the analog video surveillance system controlling a PTZ of the digital video surveillance system according to an embodiment of the present invention;
Fig. 4 shows a flowchart of the digital video surveillance system calling a video image of the analog video surveillance system according to an embodiment of the present invention; and
Fig. 5 shows a flowchart of the digital video surveillance system controlling a PTZ of the analog video surveillance system according to an embodiment of the present invention.

### Detailed Description of the Embodiments

The present invention is further illustrated below by reference to accompanying drawings in conjunction with embodiments.

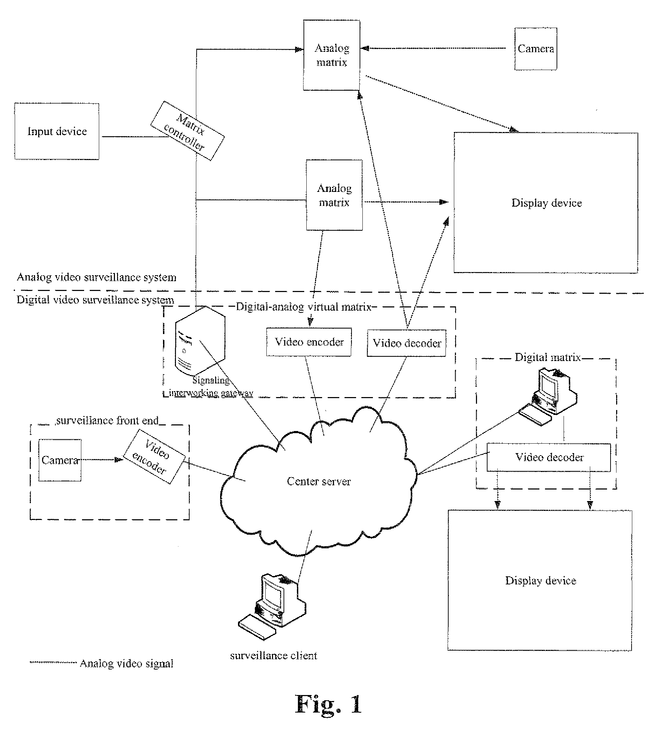

In the embodiment as shown in Fig. 1, the analog and digital video surveillance combination system comprises an analog video surveillance system and a digital video surveillance system, and a digital-analog virtual matrix is deployed between the analog video surveillance system and the digital video surveillance system.

The analog video surveillance system in this embodiment mainly comprises an input device, a matrix controller, an analog matrix, a camera installed on site with a pan/tilt/zoom (PTZ), and a display device for playing a video. The display device generally can adopt a TV wall or a monitor. A video from the camera is connected to the TV wall or the monitor using an analog video line. The input device can adopt a control keyboard, and switching and controlling can be performed through the control keyboard using the matrix controller. The analog matrix selects and specifies a video channel to output a video signal to the TV wall or the monitor, so that the surveillance image of the camera can be played in real time, or a video can be recorded in real time by adopting a video recorder.

The digital video surveillance system in this embodiment mainly comprises a surveillance front end, a client surveillance end, a center server, a digital matrix and a display device for playing a video. The surveillance front end comprises a camera installed on site with a PTZ and a video encoder for encoding a video signal output from the camera. The digital matrix is configured to process a digital video; at the video output end, the video decoder thereof converts a digital signal into an analog signal to output to the display device. The display device can be a TV wall or a monitor.

The digital-analog virtual matrix in this embodiment can be deployed at the side of the analog video surveillance system, also can be deployed at the side of the digital video surveillance system. The digital-analog virtual matrix comprises a signaling interworking gateway, a video encoder and a video decoder. The signaling interworking gateway, connected to the digital video surveillance system through an IP network, and connected to the matrix controller in the analog video surveillance system by adopting an IP network or other communication modes such as RS-485, is configured to realize the conversion of signaling protocols between the analog video surveillance system and the digital video surveillance system. The video input of the video encoder is connected to the output of the analog matrix of the analog video surveillance system (or a video signal is shunted out from the input of the analog matrix); the video encoder converts the video signal into a digital video stream and send the digital video stream to the digital video surveillance system through the IP network. The video decoder is configured to acquire a digital video stream from the digital video surveillance system, decode the digital video stream and then output a video signal, wherein the output video signal can be directly connected to the display device in the analog video surveillance system or serve as the video input of the analog matrix.

Four implementation flows are provided below, and the specific implementation adopts the following steps.

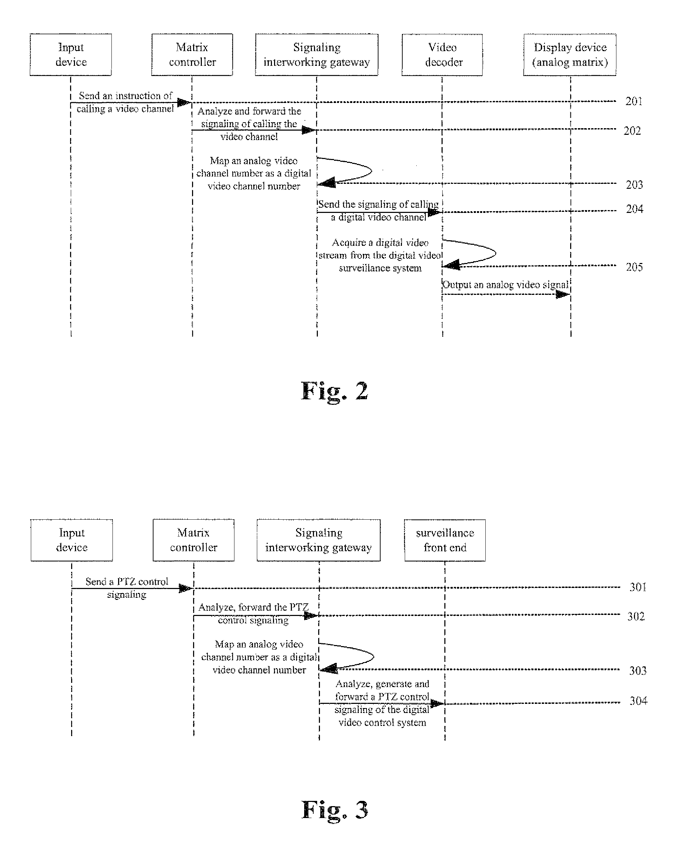

The flow of the analog video surveillance system calling a video image of the digital video surveillance system is as shown in Fig. 2. The specific steps are as follows.

Step 201: when a user of an analog video surveillance system needs to call an image of a digital video surveillance system, an input device, such as a control keyboard or a Personal Computer (PC), is adopted to send a signaling of calling a video channel to a matrix controller of the analog video surveillance system.

Step 202: the matrix controller analyzes a called channel number in the signaling of calling the video channel, determines that the video channel needed to be called is from the digital video surveillance system according to the channel number in the signaling, and then forwards the signaling of calling the video channel to a signaling interworking gateway. The video channel number in the analog video surveillance system has certain rules, and the channel number rules can be extended to tell whether the called video channel is from the analog video surveillance system or from the digital video surveillance system, in this way, the matrix controller can forward a control signaling to the analog matrix of the analog video surveillance system or to the signaling interworking gateway of the digital video surveillance system according to the called video channel number.

Step 203: after receiving the signaling of calling the video channel, the signaling interworking gateway analyzes the signaling and maps a video channel number in the analog video surveillance system as a video channel number of the digital video surveillance system, and meanwhile selects a video decoder and an output channel of the video decoder according to the number of the display device for displaying the video or an input matrix number. The mapping relationship between the analog video channel number and the digital video channel number is preconfigured in the account-opening process, and the information about the physical connection of a video signal output from each output channel of the video decoder to the input of a specific analog matrix or a display device in the analog video surveillance system is configured during the project implementation process.

Step 204: the signaling interworking gateway sends the signaling of calling a digital video channel to the selected video decoder through the digital video surveillance system.

Step 205: after receiving the signaling of calling a video, the video decoder actively requests a video from the digital video surveillance system, after the digital video surveillance system sends a digital video stream to the video decoder, the video decoder decodes the digital video stream and outputs an analog video signal to a corresponding output terminal, and the output terminal of the video decoder is connected to the display device or the input of the analog matrix in the analog video surveillance system.

In the combination system, in the condition that the output terminal of the video decoder is connected to the input of the analog matrix in the analog video surveillance system, in Step 202, the matrix controller needs to send a matrix control signaling to the corresponding analog matrix simultaneously to control the analog matrix to switch the video signal output by the video decoder to the display device.

The flow of the analog video surveillance system controlling a PTZ of the digital video surveillance system is as shown in Fig. 3, and the specific steps are as follows.

Step 301: a user of an analog surveillance system sends a PTZ control signaling to a matrix controller through an input device such as a control keyboard.

Step 302: the matrix controller analyzes a channel number of the PTZ control in the control signaling and determines that the channel needed to be controlled is from the digital video surveillance system according to the channel number, and then forwards the PTZ control signaling to a signaling interworking gateway.

Step 303: after receiving the PTZ control signaling, the signaling interworking gateway analyzes the control signaling, maps a video channel number in the analog video surveillance system as a video channel number of the digital video surveillance system, forms a PTZ control signaling of the digital video surveillance system and sends it to the digital video surveillance system, then a center server of the digital video surveillance system forwards the PTZ control signaling to a surveillance front end.

Step 304: the camera PTZ of the surveillance front end responds to the PTZ control signaling, performs action and adjusts direction.

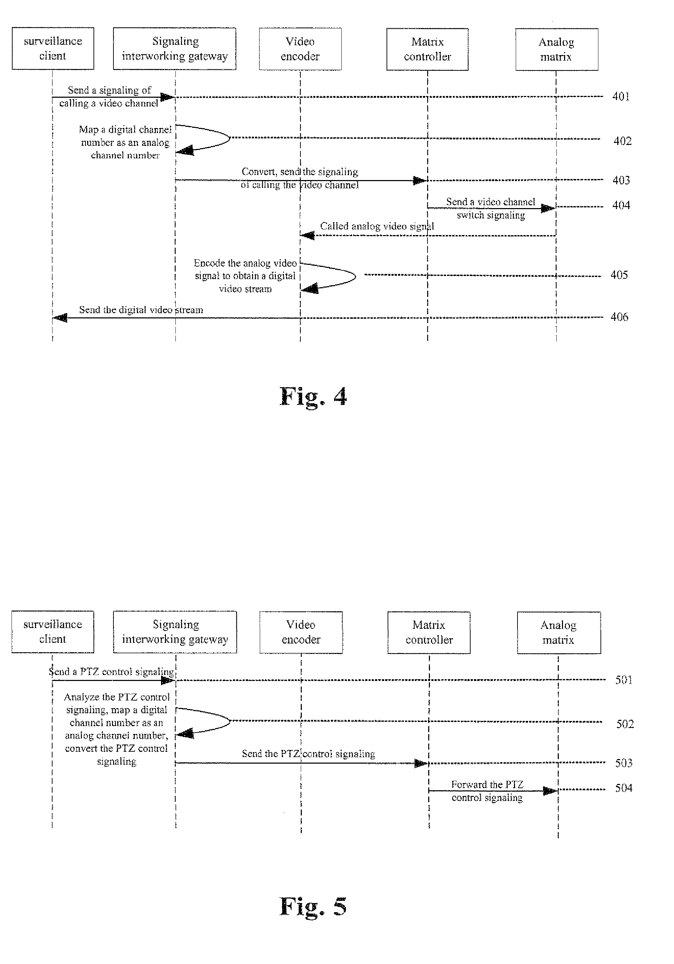

The flow of the digital video surveillance system calling a video image of the analog video surveillance system is as shown in Fig. 4, and the specific steps are as follows.

Step 401: when a surveillance client needs to play a video channel image in an analog video surveillance system, a signaling of calling a video channel is sent to a signaling interworking gateway through a center server of a digital video surveillance system.

Step 402: after receiving the signaling of calling the video channel, the signaling interworking gateway analyzes the signaling of calling the video channel, judges that the called video channel is from the analog video surveillance system, maps a digital video channel number as a video channel number in the analog video surveillance system, and selects, from a video encoder, one video channel as the input of an analog video signal. The mapping relationship between the digital video channel number and the analog video channel number is preconfigured in the project implementation. The video input channel of the video encoder is physically connected to the output of an analog matrix of the analog video surveillance system, wherein this physical connection relationship also is preconfigured in the projection implementation.

Step 403: the signaling interworking gateway converts protocols, sends a signaling of calling an analog video channel to a matrix controller of the analog video surveillance system. The signaling interworking gateway and the matrix controller can be interconnected through an IP network, also can be interconnected through other communication interfaces such as RS-485.

Step 404: the matrix controller sends a video channel switch signaling to the analog matrix; the analog matrix outputs the called video channel input signal to a video output terminal connected to the video encoder according to the switch signaling; the called analog video signal is input to the video encoder.

Step 405: the video encoder encodes the input video signal to obtain a digital video stream.

Step 406: the video encoder sends the digital video stream obtained by encoding to the digital video surveillance system; the digital video surveillance system sends the digital video stream to the surveillance client through a center server; the surveillance client receives the digital video stream, decodes the digital video stream and displays a video image.

The flow of the digital video surveillance system controlling a PTZ of the analog video surveillance system is as shown in Fig. 5, and the specific steps are as follows.

Step 501: when a surveillance client needs to control a PTZ of a video channel of an analog video surveillance system, a PTZ control signaling is sent to a signaling interworking gateway through a center server.

Step 502: after receiving the PTZ control signaling, the signaling interworking gateway analyzes the control signaling, judges that the controlled channel is from the analog video surveillance system, maps a digital video channel number as a video channel number in the analog video surveillance system, and converts the PTZ control signaling of the digital video surveillance system into a PTZ controlling signaling of the analog video surveillance system.

Step 503: the signaling interworking gateway sends the PTZ controlling signaling of the analog video surveillance system to a matrix controller in the analog video surveillance system.

Step 504: the matrix controller forwards the PTZ control signaling to an analog matrix according to the number of the controlled channel; the analog matrix outputs the control signaling to control the PTZ of the camera to perform action.

In the embodiments of the present invention, the problem of mutual access between an analog video surveillance system and a digital video surveillance system is solved. A signaling interworking and conversion gateway device and video encoder/decoder are added between the analog video surveillance system and the digital video surveillance system to mutually convert signaling data and video data respectively, so as to realize seamless butt joint of the two video surveillance systems.

The above are further detailed descriptions made to the present invention in conjunction with preferable embodiments, however, they are only examples provided for a better understanding, it should not be considered that the specific implementations of the present invention are only limited to the descriptions. For those skilled in the technical field to which the present invention belongs, various possible equivalent changes or substitutes can be made to the present invention on the premise of not departing from the idea of the present invention; and these changes or substitutes are deemed to be included within the protection scope of the present invention.

## Claims

1. An analog and digital video surveillance combination system, **characterized by** comprising: an analog video surveillance system, a digital video surveillance system and a digital-analog virtual matrix, wherein
the digital-analog virtual matrix, connected between the analog video surveillance system and the digital video surveillance system, is configured to realize a conversion of signaling protocols between the analog video surveillance system and the digital video surveillance system; acquire a video signal from the analog video surveillance system, convert the video signal into a digital video stream and send the digital video stream to the digital video surveillance system; acquire a digital video stream from the digital video surveillance system, decode the digital video stream and output a decoding result to the analog video surveillance system.

2. The analog and digital video surveillance combination system according to claim 1, **characterized in that** the digital-analog virtual matrix comprises a signaling interworking gateway, a video encoder and a video decoder, wherein
the signaling interworking gateway, connected to the analog video surveillance system and the digital video surveillance system respectively, is configured to realize the conversion of the signaling protocols between the analog video surveillance system and the digital video surveillance system;
the video encoder, a video input of which is connected to a video output of the analog video surveillance system, is configured to convert the video signal into the digital video stream and send the digital video stream to the digital video surveillance system; and
the video decoder is configured to acquire the digital video stream from the digital video surveillance system, decode the digital video stream and output a video signal to the analog video surveillance system.

3. A method for combining analog and digital video surveillance systems, **characterized by** comprising:
deploying a digital-analog virtual matrix between an analog video surveillance system and a digital video surveillance system, wherein the digital-analog virtual matrix is configured to realize a conversion of signaling protocols between the analog video surveillance system and the digital video surveillance system, acquire a video signal from the analog video surveillance system, convert the video signal into a digital video stream and send the digital video stream to the digital video surveillance system, acquire a digital video stream from the digital video surveillance system, decode the digital video stream and output a decoding result to the analog video surveillance system.

4. The method for combining analog and digital video surveillance systems according to claim 3, **characterized by** further comprising: configuring a signaling interworking gateway, a video encoder and a video decoder on the digital-analog virtual matrix, wherein the signaling interworking gateway is configured to realize the conversion of the signaling protocols between the analog video surveillance system and the digital video surveillance system; the video encoder, a video input of which is connected to a video output of the analog video surveillance system, is configured to convert the video signal into the digital video stream and send the digital video stream to the digital video surveillance system; the video decoder is configured to acquire the digital video stream from the digital video surveillance system, decode the digital video stream and output a video signal to the analog video surveillance system.

5. The method for combining analog and digital video surveillance systems according to claim 4, **characterized by** comprising a step of the digital video surveillance system calling a video image of the analog video surveillance system which comprises:
the digital video surveillance system sending a signaling of calling a video channel of the analog video surveillance system to the signaling interworking gateway;
the signaling interworking gateway mapping a digital video channel number as a video channel number in the analog video surveillance system, and selecting, from the video encoder, a video channel as an input of an analog video signal;
the signaling interworking gateway converting protocols and sending a signaling of calling an analog video channel to a matrix controller of the analog video surveillance system;
the matrix controller sending a video channel switch signaling to an analog matrix, and the analog matrix outputting a called video channel input signal to the video encoder according to the video channel switch signaling; and
the video encoder encoding the input video signal to obtain a digital video stream and sending the digital video stream to the digital video surveillance system.

6. The method for combining analog and digital video surveillance systems according to claim 4, **characterized by** comprising a step of the digital video surveillance system controlling a pan/tilt/zoom (PTZ) of the analog video surveillance system which comprises:
a surveillance client of the digital video surveillance system sending a PTZ control signaling to the signaling interworking gateway;
after receiving the PTZ control signaling, the signaling interworking gateway mapping a digital video channel number as a video channel number in the analog video surveillance system, and converting the PTZ control signaling of the digital video surveillance system into a PTZ control signaling of the analog video surveillance system;
the signaling interworking gateway sending the PTZ control signaling of the analog video surveillance system to a matrix controller in the analog video surveillance system;
the matrix controller forwarding the PTZ control signaling to an analog matrix according to the video channel number, and the analog matrix controlling the PTZ of the analog video surveillance system.

7. The method for combining analog and digital video surveillance systems according to claim 4, **characterized by** comprising a step of the analog video surveillance system calling a video image of the digital video surveillance system which comprises:
a matrix controller of the analog video surveillance system receiving a signaling of calling a video channel of the digital video surveillance system;
the matrix controller forwarding the signaling of calling the video channel to the signaling interworking gateway;
after receiving the signaling of calling the video channel, the signaling interworking gateway analyzing the signaling of calling the video channel, mapping a video channel number in the analog video surveillance system as a video channel number of the digital video surveillance system, and selecting the video decoder and an output channel of the video decoder;
the signaling interworking gateway sending the signaling of calling the video channel to the selected video decoder;
the selected video decoder actively requesting a video from the digital video surveillance system, decoding a digital video stream after the digital video surveillance system sends the digital video stream to the video decoder, and outputting an analog video signal to the analog video surveillance system.

8. The method for combining analog and digital video surveillance systems according to claim 4, **characterized by** comprising a step of the analog video surveillance system controlling a PTZ of the digital video surveillance system which comprises:
when receiving a signaling of controlling the PTZ of the digital video surveillance system, the analog video surveillance system sending the signaling of controlling the PTZ of the digital video surveillance system to a matrix controller;
the matrix controller forwarding the signaling of controlling the PTZ of the digital video surveillance system to the signaling interworking gateway;
after receiving the signaling of controlling the PTZ of the digital video surveillance system, the signaling interworking gateway analyzing the signaling of controlling the PTZ of the digital video surveillance system, mapping a video channel number in the analog video surveillance system as a video channel number of the digital video surveillance system, forming a PTZ control signaling of the digital video surveillance system and sending the PTZ control signaling to the digital video surveillance system; then the PTZ of the digital video surveillance system responding to the PTZ control signaling of the digital video surveillance system.

9. The method for combining analog and digital video surveillance systems according to 7, **characterized by** further comprising the steps of: connecting an output of the video decoder to an input of an analog matrix in the analog video surveillance system; the matrix controller sending a matrix control signaling to a corresponding analog matrix simultaneously to control the analog matrix to switch the video signal output by the video decoder to a display device.

10. The method for combining analog and digital video surveillance systems according to any of claims 4 to 9, **characterized in that** the signaling interworking gateway and a matrix controller of the analog video surveillance system are interconnected through an Internet Protocol (IP) network or a communication interface.
